# EUROPÄISCHE PATENTANMELDUNG

(11) **EP 3 311 663 A1**
(43) Veröffentlichungstag der Anmeldung: **25.04.2018**
(21) Anmeldenummer: 17401108.0
(22) Anmeldetag: 17.10.2017
(51) Int. Cl.: A01M 7/00

(54) **SPRITZEINRICHTUNG ZUM AUSBRINGEN EINER SPRITZFLÜSSIGKEIT AUF EINER LANDWIRTSCHAFTLICHEN NUTZFLÄCHE**

(30) Priorität: 17.10.2016 DE 102016119688
(71) Anmelder: Amazonen-Werke H. Dreyer GmbH & Co. KG, 49205 Hasbergen (DE)
(72) Erfinder: Austermann, Stefan, 48291 Telgte (DE)

(57) **Zusammenfassung**

Spritzeinrichtung (1) zum Ausbringen einer Spritzflüssigkeit (S) auf einer landwirtschaftlichen Nutzfläche, umfassend eine Spritzbalkenandordnung (2) mit Spritzdüsen (21', 21") zum Ausbringen der Spritzflüssgkeit (S) auf der landwirtschaftlichen Nutzfläche; einen ersten Tank (3) für eine Trägerflüssigkeit (T); eine die Trägerflüssigkeit (T) aus dem ersten Tank (3) zur Spritzbalkenanordnung (2) fördernde erste Pumpe (4); einen zweiten Tank (5_{A}) für ein Wirkstoffmittel (A); wenigstens eine das Wirkstoffmittel (A) vom zweiten Tank (5_{A}) zur Spritzbalkenanordnung (2) fördernde zweite Pumpe (6_{A}); und wenigstens eine Direkteinspeisungseinheit (22', 22"), um während des Ausbringens das Wirkstoffmittel (A) in die Trägerflüssigkeit (T) einzuspeisen und daraus das Spritzmittel (S) zu bilden, dadurch gekennzeichnet, dass die wenigstens eine zweite Pumpe (6_{A}) als Stoßwelleninjektor mit einer aktiven Membran (63) zur Förderung des Wirkstoffmittels (A) und mit einem Stator (62) zur Erzeugung eines auf die aktive Membran (63) direkt einwirkenden elektromagnetischen Anregungsfelds ausgebildet ist.

## Beschreibung

Die Erfindung betrifft eine Spritzeinrichtung zum Ausbringen einer Spritzflüssigkeit auf einer landwirtschaftlichen Nutzfläche mit den Merkmalen des Oberbegriffs von Anspruch 1.

Üblicherweise werden derartige Spritzeinrichtungen dazu eingesetzt, eine Spritzflüssigkeit auf einer landwirtschaftlichen Nutzfläche zu versprühen, beispielsweise ein Dünge- oder Pflanzenschutzmittel.

Bei konventionellen Spritzeinrichtungen wird die Spritzflüssigkeit auf dem Hof angemischt und auf der landwirtschaftlichen Nutzfläche mittels einer Spritzbalkenanordnung mit Spritzdüsen ausgebracht. Nachteilig dabei ist, dass die Anmischung auf dem Hof und der Transport große Risiken für den Anwender und die Umwelt bergen. Zudem besteht das Risiko, dass bei einem unplanmäßigen Verlauf der Applikation große Mengen Spritzflüssigkeit zu viel angemischt wurden, die dann entweder entsorgt oder gelagert werden müssen.

Um diesen Nachteil zu beheben wurden Spritzeinrichtungen mit einer Direkteinspeisungseinheit vorgeschlagen, mit der während des Ausbringens in eine Trägerflüssigkeit (beispielsweise Wasser) ein Wirkstoffmittel eingespeist wird, um daraus das Spritzmittel nach Bedarf zu mischen. Dementsprechend umfassen derartige Spritzeinrichtungen einen ersten Tank für die Trägerflüssigkeit und einen zweiten Tank für das Wirkstoffmittel und zugehörige Pumpen, um die Trägerflüssigkeit und das Wirkstoffmittel der Direkteinspeisungseinheit zuzuführen. Dadurch ist es möglich, das Wirkstoffmittel gemäß dem tatsächlichen Bedarf mit der Trägerflüssigkeit zu mischen und auf der landwirtschaftichen Nutzfläche auszubringen.

Zur genauen Dosierung des Wirkstoffmittels sind unter anderem Peristaltikpumpen oder Membranpumpen bekannt. Allerdings sind derartige Pumpen in der Landtechnik durch die Vielzahl der gegeneinander beweglichen Teile einem Verschleiß ausgesetzt und dadurch entsprechend wartungsintensiv. Darüber hinaus erfordern derartige Pumpen einen vergleichsweise großen Bauraum.

Aufgabe der vorliegenden Erfindung ist es daher, eine Spritzeinrichtung zum Ausbringen einer Spritzflüssigkeit auf einer landwirtschaftlichen Nutzfläche bereitstellen, bei der die zuvor genannten Nachteile behoben sind.

Zur Lösung dieser Aufgabenstellung stellt die Erfindung eine Spritzeinrichtung mit den Merkmalen des Anspruchs 1 bereit. Vorteilhafte Ausführungsformen sind in den Unteransprüchen genannt.

Dadurch, dass die wenigstens eine zweite Pumpe als Stoßwelleninjektor mit einer aktiven Membran zur Förderung des Wirkstoffmittels und mit einem Stator zur Erzeugung eines auf die aktive Membran direkt einwirkenden elektromagnetischen Anregungsfelds ausgebildet ist, wird die vom Stator erzeugte elektromagnetische Kraft unmittelbar auf die aktive Membran übertragen. Folglich sind also zur Kraftübertragung keine weiteren beweglichen Teile zwischen dem Stator und der aktiven Membran notwendig. Dadurch weist die zweite Pumpe besonders wenig bewegliche Teile auf und der Verschleiß wird so deutlich verringert. Gleichermaßen wird der Bauraum durch die reduzierte Anzahl der benötigten Teile vermindert.

Stoßwelleninjektoren mit einer aktiven Membran und einem Stator zur Erzeugung eines auf die aktive Membran direkt einwirkenden elektromagnetischen Anregungsfelds sind an sich im Automobilbereich bekannt, beispielsweise als elektromagnetisches Aktormodul aus der EP 2 461 012 A1. Allerdings werden derartige Stoßwelleninjektoren im Automobilbereich in Brennstoffeinspritzanlagen und Systemen zur Abgasnachbehandlung eingesetzt, die mit sehr viel höherem Druck arbeiten als Spritzeinrichtungen in der Landtechnik. Es hat sich allerdings im Rahmen der Erfindung überraschenderweise herausgestellt, dass diese auch in der Landtechnik zur Förderung des Wirkstoffmittels in einer Spritzeinrichtung vorteilhaft einsetzbar sind, da sie mit wenigen beweglichen Teilen auskommen und besonders kompakt aufgebaut sind.

Die Spritzeinrichtung kann Teil einer Feldspritze oder an einem Ackerschlepper angeordnet sein. Vorzugsweise kann die Spritzeinrichtung auf einem Fahrwerk angeordnet sein, um sie auf der landwirtschaftlichen Nutzfläche abzustützen und darauf zu bewegen. Die Spritzbalkenanordnung, der erste und zweite Tank, die erste und zweite Pumpe sowie die Direkteinspeisungseinheit können an einem Tragrahmen oder dergleichen angeordnet sein. Vorzugsweise kann der Tragrahmen auf dem Fahrwerk angeordnet oder Teil des Fahrwerks sein.

Die Spritzbalkenanordnung kann ein Gestänge umfassen, an dem die Spritzdüsen angeordnet sind. Die Spritzbalkenanordnung kann vorzugsweise quer zu einer vorbestimmten Fahrtrichtung der Spritzeinrichtung verlaufen, so dass die Spritzflüssigkeit durch die Fortbewegung der Spritzeinrichtung auf einem dementsprechend breiten Abschnitt der Nutzfläche ausgebracht wird. Die Spritzdüsen können alle oder gruppenweise in regelmäßigen Abständen an der Spritzbalkenanordnung angeordnet sein. Die Spritzdüsen können über wenigstens eine Flüssigkeitsleitung mit der Direkteinspeisungseinheit verbunden sein.

Der erste Tank kann eine Füllöffnung zum Nachfüllen der Trägerflüssigkeit und eine Abgabeöffnung zur Abgabe der Trägerflüssigkeit an die erste Pumpe umfassen. Vorzugsweise kann die erste Pumpe über eine Flüssigkeitsleitung mit dem ersten Tank verbunden sein. Die erste Pumpe kann beispielsweise als Kolbenpumpe oder Kreiselpumpe ausgebildet sein. Die Trägerflüssigkeit kann vorzugsweise Wasser sein oder umfassen. Dadurch kann die Trägerflüssigkeit gefahrlos vom Bedienpersonal eingesetzt werden. Zudem kann nach dem Spritzen überbleibende Trägerflüssigkeit einfach einer Abwasserentsorgung zugeführt werden.

Der zweite Tank kann eine Füllöffnung zum Nachfüllen des Wirkstoffmittels und eine Abgabeöffnung zur Abgabe des Wirkstoffmittels an die zweite Pumpe umfassen. Vorzugsweise kann die zweite Pumpe über eine Flüssigkeitsleitung mit dem zweiten Tank verbunden sein. Das Wirkstoffmittel kann ein Mittel zur Behandlung von Pflanzen auf der landwirtschaftlichen Nutzfläche umfassen. Das Wirkstoffmittel kann beispielsweise ein Düngemittel, ein Pflanzenschutzmittel, ein Pestizid oder dergleichen umfassen. Denkbar ist, dass das Wirkstoffmittel als Konzentrat vorliegt.

Die Direkteinspeisungseinheit kann ein Mischer sein, der dazu ausgebildet ist, die Trägerflüssigkeit mit dem Wirkstoffmittel zu vermischen. Beispielsweise kann die Direkteinspeisungseinheit als Flüssigkeitsleitung für die Trägerflüssigkeit von der ersten Pumpe her ausgebildet sein, in die eine Wirkstoffmittelleitung von der zweiten Pumpe her einmündet, um das Wirkstoffmittel in die Flüssigkeitsleitung einzuspeisen. Denkbar ist, dass das Wirkstoffmittel mit einer Düse in die Flüssigkeitsleitung eingespeist wird. Zudem kann die Direkteinspeisungseinheit wenigstens ein Mischelement umfassen, um das in die Trägerflüssigkeit eingespeiste Wirkstoffmittel zu vermischen. Die Direkteinspeisungseinheit kann über Flüssigkeitsleitungen mit der ersten und zweiten Pumpe verbunden sein.

Der Stoßwelleninjektor kann eine Kammer für die Förderung des Wirkstoffmittels umfassen, wobei eine Begrenzungsfläche der Kammer durch die aktive Membran gebildet wird. Die aktive Membran kann dazu ausgebildet sein, Stoßwellen auf das in der Kammer befindliche Wirkstoffmittel abzugeben. Vorzugsweise kann die aktive Membran im Betrieb im direkten Kontakt mit dem Wirkstoffmittel in der Kammer stehen. Die aktive Membran kann umfänglich derart gelagert sein, dass sie sich durch das einwirkende elektromagnetische Anregungsfeld konkav und/oder konvex verbiegen kann. Der Stator und die aktive Membran können derart ausgebildet sein, dass durch das elektromagnetische Anregungsfeld Wirbelströme in der aktiven Membran induzierbar sind. Vorzugsweise kann der Stator ein oder mehrere Spulenelemente umfassen, um das elektromagnetische Anregungsfeld zu erzeugen. Zudem kann der Stator einen Träger umfassen, an dem die Spulenelemente angeordnet sind. Darüber hinaus kann der Stator mit elektrischen Leitungselementen ausgebildet sein, um den Spulenelementen einen elektrischen Strom von einer Treibereinheit zuzuführen. Die aktive Membran kann wenigstens teilweise elektrisch leitend ausgebildet sein, so dass darin mit dem Stator Wirbelströme erzeugbar sind. Der Stator und die aktive Membran können als nebeneinander parallel angeordnete Scheiben ausgebildet sein. "Nebeneinander parallel angeordnet" kann hier bedeuten, dass der Stator und die aktive Membran im stromlosen Zustand unmittelbar nebeneinander liegen. Beispielsweise kann die Kammer rohrartig ausgebildet sein, wobei die aktive Membran eine Stirnfläche der rohrartigen Kammer bildet. Die aktive Membran kann über einen Dichtungsring gegen die Kammer abgedichtet sein, vorzugsweise wobei der Dichtungsring als Lagerelement für die aktive Membran ausgebildet ist. Dadurch wird eine flexible Lagerung der aktiven Membran gewährleistet. Denkbar ist, dass der Stator zwischen der aktiven Membran und einer passiven Membran angeordnet ist. Die passive Membran kann dazu ausgebildet sein, dass die darauf durch das elektromagnetische Anregungsfeld des Stators wirkenden Kräfte mechanisch auf die aktive Membran übertragen werden. Dadurch wird die Bewegung der aktiven Membran zur Erzeugung der Stoßwellen verstärkt. Vorzugsweise kann die passive Membran auf der zum Stator gegenüberliegenden Seite gegen ein Gehäuse anlegen, um die darauf wirkenden Kräfte abzustützen. Die passive Membran kann ebenfalls leitfähig ausgebildet sein, so dass darin durch das elektromagnetische Anregungsfeld Wirbelströme induziert werden können.

Vorzugsweise kann die wenigstens eine zweite Pumpe als Dosierpumpe ausgebildet sein. Dadurch ist es möglich, das Wirkstoffmittel besonders genau zu dosieren.

Eine Steuerungseinheit kann dazu ausgebildet sein, die erste und/oder zweite Pumpe und die Direkteinspeisungseinheit durch elektrische Steuersignale zu steuern. Die Steuerungseinheit kann mit dem Stator verbunden sein, um das Anregungsfeld zu erzeugen. Die Steuerungseinheit kann mit dem Stator über eine Treibereinheit und/oder elektrische Leitung verbunden sein. Die Treibereinheit kann dazu ausgebildet sein, impulsartige Ströme zu erzeugen, so dass sich die Stärke des elektromagnetischen Anregungsfelds impulsartig verändert. Dadurch werden besonders hohe Wirbelströme in der aktiven Membran und gegebenenfalls auch in der passiven Membran erzeugt. Denkbar ist aber auch, dass die Einheiten der Spritzeinrichtung teilweise manuell steuerbar sind.

Die wenigstens eine zweite Pumpe kann stromaufwärts der aktiven Membran ein Einlassventil und stromabwärts der aktiven Membran ein Auslassventil umfassen, um die Fließrichtung des Wirkstoffmittels durch die zweite Pumpe hindurch vorzugeben. Das Einlassventil und/oder das Auslassventil können beispielsweise als Rückschlagventil ausgebildet sein. Denkbar ist auch, dass das Einlassventil und/oder das Auslassventil elektrisch steuerbar ausgebildet sind, vorzugsweise wobei sie durch die Steuerungseinheit gesteuert werden. Dadurch kann die Pumpeneffizienz erhöht werden.

Vorzugsweise kann stromaufwärts der wenigstens einen zweiten Pumpe eine Verdünnungseinheit angeordnet sein, um das Wirkstoffmittel vor dem Fördern mit der zweiten Pumpe mit der Trägerflüssigkeit aus dem ersten Tank oder mit einer Verdünnungsflüssigkeit aus einem Zusatztank zu verdünnen. Dadurch ist es möglich, die Viskosität des Wirkstoffmittels auf die Förderung mit der zweiten Pumpe anzupassen. Denkbar ist allerdings auch, dass die zweite Pumpe dazu ausgebildet ist, das unverdünnte Wirkstoffmittel zu fördern.

Stromabwärts der ersten Pumpe kann eine erste Druckregulierungseinheit angeordnet sein, um den Druck der Trägerflüssigkeit stromaufwärts der Direkteinspeisungseinheit zu regulieren. Dadurch kann der Druck der Trägerflüssigkeit besonders genau auf die Einspeisung des Wirkstoffmittels angepasst werden. Die erste Druckregulierungseinheit kann über Flüssigkeitsleitungen mit der ersten Pumpe und der Direkteinspeisungseinheit verbunden sein. Vorzugsweise kann die erste Druckregulierungseinheit als Dreiwegeventil ausgebildet sein, um einen Teil der von der ersten Pumpe geförderten Trägerflüssigkeit zurück in den ersten Tank zu führen und einen anderen Teil der Trägerflüssigkeit zur Direkteinspeisungseinheit. Dadurch arbeitet die erste Druckregulierungseinheit besonders effizient. Denkbar ist, dass die erste Druckregulierungseinheit durch die Steuerungseinheit steuerbar ausgebildet ist.

Wenigstens eine zweite Druckregulierungseinheit kann stromabwärts der wenigstens einen zweiten Pumpe angeordnet sein, um den Druck des Wirkstoffmittels vor der Direkteinspeisungseinheit zu regulieren. Dadurch ist es möglich, den Einspeisedruck des Wirkstoffmittels in die Trägerflüssigkeit unabhängig von der Förderung durch die zweite Pumpe anzupassen. Vorzugsweise kann die zweite Druckregulierungseinheit mit einer oder mehreren Ventilblenden ausgebildet sein. Dadurch ist die zweite Druckregulierungseinheit besonders einfach aufgebaut. Denkbar ist, dass die zweite Druckregulierungseinheit durch die Steuerungseinheit steuerbar ausgebildet ist.

Vorzugsweise kann genau eine zweite Pumpe vorhanden sein, die dem zweiten Tank zugeordnet ist. Dadurch kann die Spritzeinrichtung besonders kostengünstig hergestellt werden. Die Spritzbalkenanordnung kann mehrere Teilbreiten jeweils mit einer Gruppe von Spritzdüsen umfassen, wobei insbesondere jeder Teilbreite ein Steuerventil zugeordnet ist, um in die Teilbreiten verschiedene Wirkstoffmittelmengen einzuspeisen. Dadurch ist es selbst beim Einsatz von genau einer zweiten Pumpe möglich, mit den einzelnen Teilbreiten bedarfsabhängig unterschiedliche Wirkstoffmittelmengen auszubringen. Die Steuerventile können elektrisch ansteuerbar ausgebildet sein und/oder mit der Steuerungseinheit verbunden sein. Dadurch können mit der Steuerungseinheit die Wirkstoffmittelmengen jeder Teilbreite einzelnen gesteuert werden.

Denkbar ist auch, dass die Spritzbalkenanordnung mehrere Teilbreiten jeweils mit einer Gruppe von Spritzdüsen umfasst, wobei mehrere zweite Pumpen und mehrere Direkteinspeisungseinheiten vorhanden sind, und wobei jeder Teilbreite eine der zweiten Pumpen und eine der Direkteinspeisungseinheiten zugeordnet sind, um in die Teilbreiten verschiedene Wirkstoffmittelmengen einzuspeisen. Dadurch kann auf Steuerventile in den Teilbreiten verzichtet werden, um die jeweiligen Wirkstoffmittelmengen einzuspeisen. Anders ausgedrückt können die zweiten Pumpen dazu ausgebildet sein, die Wirkstoffmittelmengen in den entsprechend zugeordneten Teilbreiten unabhängig voneinander zu dosieren.

Denkbar ist auch, dass mehrere zweite Pumpen und mehrere Direkteinspeisungseinheiten vorhanden sind, wobei jeweils einer Spritzdüse eine zweite Pumpe und eine Direkteinspeisungseinheit zugeordnet sind. Dadurch ist es abhängig vom tatsächlichen Bedarf möglich, die Wirkstoffmittelmengen in den Spritzdüsen einzeln zu steuern. Denkbar ist auch, dass die Spritzdüsen jeweils integral mit einer zweiten Pumpe und/oder mit einer Direkteinspeisungseinheit ausgebildet sind.

Die Spritzeinrichtung kann weiter einen dritten Tank für ein weiteres Wirkstoffmittel und wenigstens eine das weitere Wirkstoffmittel vom dritten Tank zur Spritzbalkenanordnung fördernde dritte Pumpe umfassen, die ebenfalls als Stoßwelleninjektor ausgebildet ist, wobei die wenigstens eine Direkteinspeisungseinheit dazu ausgebildet ist, während des Ausbringens beide Wirkstoffmittel in die Trägerflüssigkeit einzuspeisen und daraus das Spritzmittel zu bilden. Dadurch ist es möglich, mehrere verschiedene Wirkstoffmittel in die Trägerflüssigkeit einzuspeisen, um das Spritzmittel zu bilden. In ähnlicher Art und Weise kann die Spritzeinrichtung noch einen oder mehrere weitere Tanks für andere Wirkstoffmittel mit entsprechend zugeordneten Pumpen umfassen, die ebenfalls als Stoßwelleninjektoren ausgebildet sind.

Darüber hinaus stellt die Erfindung mit dem Anspruch 14 eine Feldspritze mit einem Fahrwerk und mit einer Spritzeinrichtung nach einem der Ansprüche 1-13 bereit, wobei die Spritzeinrichtung auf dem Fahrwerk angeordnet ist und darüber auf einer landwirtschaftlichen Nutzfläche abstützbar ist. Das Fahrwerk kann mit einem oder mehreren Rädern ausgebildet sein, um die Spritzeinrichtung fahrbar auf der landwirtschaftlichen Fläche abzustützen. Die Feldspritze kann einen eigenen Antrieb zur Fortbewegung auf der landwirtschaftlichen Fläche aufweisen. Alternativ kann die Feldspritze über eine Zugdeichsel mit einem Ackerschlepper verbindbar ausgebildet sein.

Darüber hinaus stellt die Erfindung mit dem Anspruch 15 ein System aus einem Ackerschlepper und einer daran angeordneten Spritzeinrichtung nach einem der Ansprüche 1-13 oder einer an den Ackerschlepper angekoppelten Feldspritze nach Anspruch 14 bereit. Dass die Spritzeinrichtung am Ackerschlepper angeordnet ist, kann hier bedeuten, dass die Spritzeinrichtung über den Ackerschlepper auf der landwirtschaftlichen Nutzfläche abgestützt wird. Anders ausgedrückt kann die Spritzeinrichtung unmittelbar am Ackerschlepper angeordnet sein. Die an den Ackerschlepper angekoppelte Feldspritze kann über eine Zugdeichsel angekoppelt sein.

Die Feldspritze nach Anspruch 14 und/oder das System nach Anspruch 15 können zudem die zuvor in Bezug auf die Ansprüche 1-13 beschriebenen Merkmale einzelnen oder in beliebigen Kombinationen umfassen.

Weitere Merkmale und Vorteile der Erfindung werden nachfolgend anhand der in den Figuren dargestellten Ausführungsbeispiele näher erläutert. Dabei zeigt:
- Fig. 1: ein Ausführungsbeispiel einer erfindungsgemäßen Spritzeinrichtung als schematische Darstellung; und
- Fig. 2: ein Ausführungsbeispiel der als Stoßwelleninjektor ausgebildeten zweiten Pumpe aus der Fig. 1.

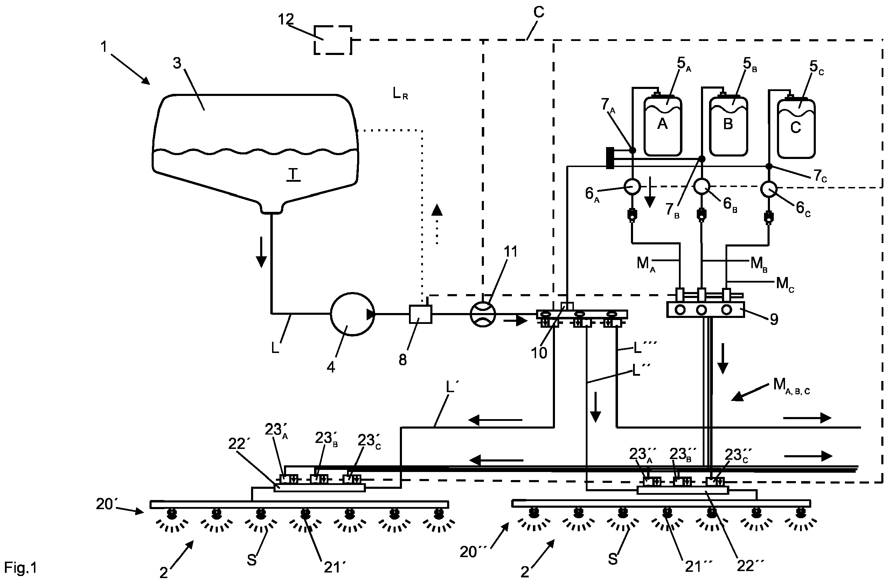

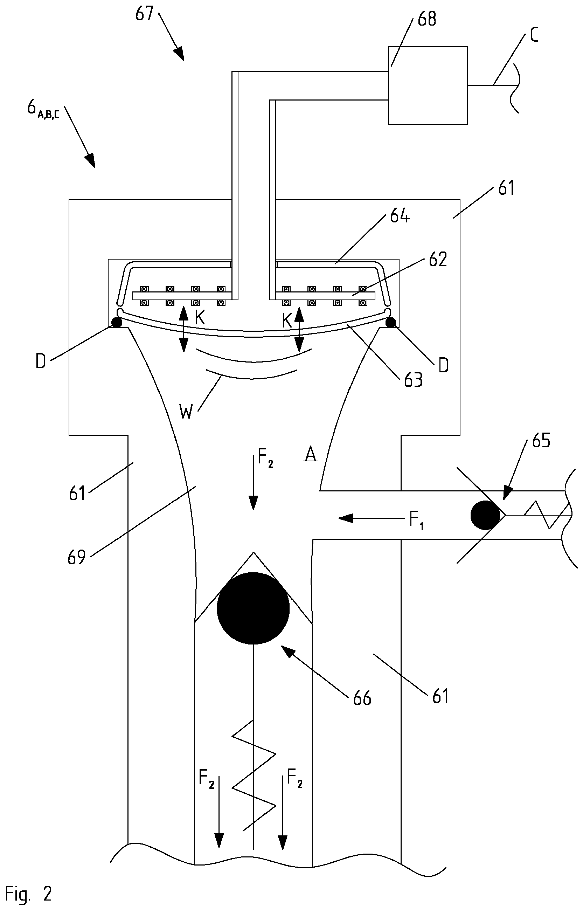

In der Fig. 1 ist ein Ausführungsbeispiel einer erfindungsgemäßen Spritzeinrichtung 1 schematisch dargestellt. Zu sehen ist die Spritzeinrichtung 1 mit der Spritzbalkenanordnung 2, dem ersten Tank 3 für die Trägerflüssigkeit T, der ersten Pumpe 4 zur Förderung der Trägerflüssigkeit T aus dem ersten Tank 3 zur Spritzbalkenanordnung 2, dem zweiten Tank 5_{A} für das Wirkstoffmittel A, der zweiten Pumpe 6_{A} zum Fördern des Wirkstoffmittels A vom zweiten Tank 5_{A} zur Spritzbalkenanordnung 2 und mit den beiden Direkteinspeisungseinheiten 22', 22" zur Einspeisung des Wirkstoffmittels A in die Trägerflüssigkeit T. Gemäß Fig. 2 und der Beschreibung weiter unten ist die zweite Pumpe 6_{A} als Stoßwelleninjektor mit einer aktiven Membran zur Förderung des Wirkstoffmittels A und mit einem Stator zur Erzeugung eines auf die aktive Membran direkt einwirkenden elektromagnetischen Anregungsfelds ausgebildet.

Zu sehen ist weiter, dass die Spritzbalkenanordnung 2 die beiden Teilbreiten 20', 20" umfasst, an denen jeweils mehrere Spritzdüsen 21', 21" angeordnet sind. Damit wird die Spritzflüssigkeit S in feinen Tröpfchen auf der landwirtschaftlichen Nutzfläche versprüht. Die Spritzbalkenanordnung 2 umfasst in bekannter Art und Weise ein hier nicht dargestelltes Gestänge mit den Spritzdüsen 21', 21", das quer zu einer vorbestimmten Fahrtrichtung der Spritzeinrichtung 1 ausgerichtet ist.

Nachfolgend wird beschrieben, wie bei der Spritzeinrichtung 1 das Wirkstoffmittel A aus dem zweiten Tank 5_{A} mit der Trägerflüssigkeit T aus dem ersten Tank 3 zusammengeführt wird, um die Spritzflüssigkeit S für die Spritzbalkenanordnung 2 zu bilden:

Der erste Tank 3 umfasst eine hier nicht genauer dargestellte Einfüllöffnung, mit der die Trägerflüssigkeit T, beispielsweise Wasser, vom Bedienpersonal eingefüllt werden kann. An der Unterseite ist der erste Tank 3 mit einer Auslauföffnung versehen, die über die Flüssigkeitsleitung L mit der ersten Pumpe 4 verbunden ist. Die erste Pumpe 4 fördert die Trägerflüssigkeit T durch die nachfolgenden Einheiten bis hin zur Spritzbalkenanordnung 2 und stellt den zum Spritzen notwendigen Druck bereit. Zudem ist stromabwärts der ersten Pumpe 4 die erste Druckregulierungseinheit 8 angeordnet, die hier vorzugsweise als elektrisch steuerbares Dreiwegeventil ausgebildet ist, um den Druck in der nachfolgenden Flüssigkeitsleitung zum Verteiler 10 hin noch genauer zu regeln. Die überschüssige Trägerflüssigkeit T gelangt von der Druckregulierungseinheit 8 über die Flüssigkeitsleitung L_{R} an den ersten Tank 3 zurück.

Weiter zu sehen ist der Verteiler 10, der stromabwärts der ersten Pumpe 4 angeordnet ist und die Trägerflüssigkeit auf die Flüssigkeitsleitungen L', L", L'" zu den einzelnen Teilbreiten 20', 20" hin aufteilt. Die Flüssigkeitsleitungen L', L", L'" münden in die entsprechenden Direkteinspeisungseinheit 22', 22" der Teilbreiten 20', 20". Denkbar ist, dass darin einzelne Steuerventile angeordnet sind, um die jeweiligen Mengen der Trägerflüssigkeit zu den einzelnen Teilbreiten 20', 20" unabhängig voneinander zu regulieren.

Weiter ist zu sehen, dass der zweite Tank 5_{A} mit dem Wirkstoffmittel A befüllt ist. Zum Befüllen weist der zweite Tank 5_{A} eine hier nicht näher gezeigte Einfüllöffnung auf. Zudem ist der zweite Tank 5_{A} an einem Auslauf über eine Flüssigkeitsleitung mit der zweiten Pumpe 6_{A} verbunden, die zum Fördern des Wirkstoffmittels A bis hin zur Spritzbalkenanordnung 2 ausgebildet ist. Stromabwärts der zweiten Pumpe 5_{A} wird das Wirkstoffmittel A über die Flüssigkeitsleitung M_{A} bis hin zu den Direkteinspeisungseinheiten 22', 22" geführt. Weiter ist zu sehen, dass optional stromabwärts des Tanks 5_{A} und stromaufwärts der zweiten Pumpe 6_{A} die Verdünnungseinheit 7_{A} angeordnet ist, um das Wirkstoffmittel A vor dem Fördern mit der zweiten Pumpe 6_{A} mit der Trägerflüssigkeit T aus dem ersten Tank 3 zu verdünnen. Dadurch ist es möglich, die Viskosität des Wirkstoffmittels A an die Förderung durch die zweite Pumpe 6_{A} anzupassen.

Des Weiteren ist zu sehen, dass stromabwärts der zweiten Pumpe 6_{A} die zweite Druckregulierungseinheit 9 angeordnet ist, die mit einer Ventilblende ausgebildet ist. Diese ist elektrisch ansteuerbar, so dass über eine entsprechendes Steuersignal der Druck des Wirkstoffmittels A zu den Direkteinspeisungseinheiten 22', 22" reguliert werden kann. Dadurch ist es möglich, einen zum Druck der Trägerflüssigkeit T passenden Arbeitsdruck des Wirkstoffmittels A bereitzustellen.

Des Weiteren ist zu sehen, dass die Spritzeinrichtung 1 optional weitere Tanks 5_{B}, 5_{C} und weitere Pumpen 6_{B}, 6_{C} für die Wirkstoffmittel B und C umfasst, wobei letztgenannte ebenfalls als Stoßwelleninjektoren nach der Fig. 2 ausgebildet sind. Den Pumpen 6_{B}, 6_{C} sind jeweils stromaufwärts die Verdünnungseinheiten 7_{B}, 7_{C} zugeordnet, um auch die Wirkstoffmittel B, C unabhängig voneinander zu verdünnen. Stromabwärts der Pumpen 6_{B}, 6_{C} werden die beiden Wirkstoffmittel B, C über die Flüssigkeitsleitungen M_{B}, M_{C} und die Druckregulierungseinheit 9 zu den Direkteinspeisungseinheiten 22', 22" geführt. Die Druckregulierungseinheit 9 weist dazu weitere steuerbare Ventilblenden auf. Dadurch ist es möglich, zusätzliche Wirkstoffmittel B, C in die Trägerflüssigkeit T einzuspeisen und somit individuelle Wirkstoffkombinationen herzustellen. Es versteht sich, dass die erfindungsgemäße Spritzeinrichtung 1 unabhängig davon auch nur zum Einspeisen eines einzigen Wirkstoffmittels A oder aber auch noch mehr Wirkstoffmitteln ausgebildet sein kann.

Mit den Direkteinspeisungseinheiten 22', 22" wird das Wirkstoffmittel A bzw. gegebenenfalls auch die Wirkstoffmittel B und C in die Trägerflüssigkeit T eingespeist. Dadurch wird das Spritzmittel S während des Ausbringens angemischt und unmittelbar danach mit den Spritzdüsen 21', 21" versprüht. Das Einspeisen des Wirkstoffs A erfolgt mit den Direkteinspeisungseinheiten 22', 22" über die Steuerventile 23'A, 23"A bzw. ggf. auch für die Wirkstoffe B und C über die Steuerventile 23'_{B}, 23"_{B}, 23'_{C}, 23"_{C}. Dadurch ist es möglich, der Trägerflüssigkeit T die gewünschten Wirkstoffmengen individuell in den Teilbreiten 20', 22" zuzuführen. Folglich ist es möglich, in den Teilbreiten mit unterschiedlichen Wirkstoffmengen und Kombinationen zu arbeiten, so dass abhängig vom Bedarf eine optimale Behandlung der landwirtschaftlichen Nutzfläche erfolgt.

Weiter ist zu sehen, dass die erste Pumpe 4, die erste Druckregulierungseinheit 8, der Verteiler 10, die zweite Pumpe 6_{A} (bzw. auch die weiteren Pumpen 6_{B}, 6_{C}), die zweite Druckregulierungseinheit 9 und die Direkteinspeisungseinheiten 22', 22" über elektrische Steuerleitungen C mit der Steuerungseinheit 12 verbunden sind. Die Steuerungseinheit 12 ist als digitale Maschinensteuerung ausgebildet, um die zuvor genannten Einheiten automatisch zu steuern, so dass während der Bearbeitung der landwirtschaftlichen Nutzfläche die Spritzflüssigkeit S mit den gewünschten Wirkstoffmengen/-kombinationen bereitgestellt wird. Denkbar ist auch, dass Teile der Spritzeinrichtung 1 manuell steuerbar sind.

In der Fig. 2 ist ein Ausführungsbeispiel der als Stoßwelleninjektor ausgebildeten zweiten Pumpe 6_{A} aus der Fig. 1 zum Fördern des Wirkstoffmittels A dargestellt. Entsprechend können gegebenenfalls auch die Pumpen 6_{B}, 6_{C} für die weiteren Wirkstoffmittel B, C genauso als Stoßwelleninjektor ausgebildet sein.

Zu sehen ist, dass die zweite Pumpe 6_{A} das Gehäuse 61 mit der Kammer 69, den Stator 62, die aktive Membran 63, das Einlassventil 65 und das Auslassventil 66 umfasst. Des Weiteren ist der Stator 62 elektrisch über die Leitungen 67 mit der Treibereinheit 68 verbunden, um den elektrischen Strom für den Stator 62 bereitzustellen. Die Treibereinheit 68 wird über die elektrische Steuerleitung C von der in der Fig. 1 dargestellten Steuerungseinheit 12 gesteuert.

Im Einzelnen ist das Gehäuse 61 mit der rohrartigen Kammer 69 ausgebildet, wobei an der in der Fig. 2 oben dargestellten Stirnseite die aktive Membran 63 als Begrenzungsfläche für das Wirkstoffmittel A angeordnet ist. Die aktive Membran 63 ist hier beispielsweise kreisscheibenförmig ausgebildet und mit der Lagerung D an die Stirnseite der Kammer 69 angekoppelt. Dadurch kann sich die aktive Membran 63 trommelartig verformen und die Stoßwellen W an das Wirkstoffmittel A abgeben.

Des Weiteren ist zu sehen, dass der Stator 62 mehrere elektrisch leitende Wicklungen umfasst, um das elektromagnetische Anregungsfeld für die aktive Membran 63 zu erzeugen. Der Stator ist hier beispielhaft kreisscheibenförmig ausgebildet und parallel zur aktiven Membran 63 angeordnet. Letztere ist in der Fig. 2 in einem durch das Anregungsfeld des Stators 62 ausgelenkten Zustand dargestellt, liegt jedoch im unausgelenkten Zustand im Wesentlichen parallel neben dem Stator 62.

Der Förderzyklus beginnt damit, dass durch einen Stromimpuls in den Leitungen 67 und durch die Wicklungen des Stators 62 ein starkes elektromagnetisches Anregungsfeld erzeugt wird, so dass entsprechende Wirbelströme in der aktiven Membran 63 induziert werden. Die Wirbelströme wirken ihrerseits elektromagnetisch gegen das Anregungsfeld und erzeugen dadurch eine entsprechende Kraft K auf die aktive Membran 63. Dadurch werden Stoßwellen W auf das Wirkstoffmittel A in der Kammer 69 ausgeübt Diese drücken das Wirkstoffmittel A in der Flussrichtung F₂ gegen das Auslassventil 66, das hier beispielsweise als Rückschlagventil ausgebildet ist. Dadurch öffnet sich das Auslassventil 66 und es wird ein entsprechender Förderfluss des Wirkstoffmittels A in Richtung F₂ aus der zweiten Pumpe 6_{A} heraus erzeugt.

Beim Abklingen der Stoßwelle W stellt sich in der Kammer 69 ein Unterdruck ein, wodurch das Auslassventil 66 geschlossen und das ebenfalls als Rückschlagventil ausgebildete Einlassventil 65 geöffnet wird. Dadurch fließt weiteres Wirkstoffmittel A in Richtung F₁ aus dem in der Fig. 1 gezeigten zweiten Tank 5_{A} in die Kammer 69 nach. Anschließend schließt das Einlassventil 65 wieder und der beschriebene Förderzyklus beginnt von vorn.

Der Förderzyklus wird also fortwährend durch eine dementsprechende Ansteuerung des Treibers 68 mittels der Steuerungseinheit 12 wiederholt, so dass das Wirkstoffmittel A in pulsierender Art und Weise mit der zweiten Pumpe 6_{A} von den Stoßwellen W gefördert wird.

Denkbar ist auch, dass das Einlassventil 65 und/oder das Auslassventil 66 elektrisch ansteuerbar ausgebildet sind und aktiv mit der Steuerungseinheit 12 in der Fig. 1 gesteuert werden.

Optional ist die passive Membran 64 gezeigt, die sich in der Fig. 2 oben gegen das Gehäuse 61 abstützt. Da sich die passive Membran 64 so in sich nicht verformen kann, wird eine entsprechende Kraft auf die aktive Membran 63 übertragen und dadurch deren Verformung verstärkt. Dadurch arbeitet die zweite Pumpe 6_{A} noch effizienter.

Dadurch, dass die zweite Pumpe 6_{A} zur Förderung des Wirkstoffmittels A durch die Ausbildung als Stoßwelleninjektor lediglich die aktive Membran 63 als bewegliches Element aufweist, ist der mechanische Verschleiß besonders gering. Zudem kann die zweite Pumpe 6_{A} besonders platzsparend aufgebaut werden.

Es versteht sich, dass in den zuvor genannten Ausführungsbeispielen genannte Merkmale nicht auf diese Kombinationen beschränkt sind, sondern auch einzelnen oder in beliebigen anderen Kombinationen möglich sind.

## Patentansprüche

1. Spritzeinrichtung (1) zum Ausbringen einer Spritzflüssigkeit (S) auf einer landwirtschaftlichen Nutzfläche, umfassend
- eine Spritzbalkenandordnung (2) mit Spritzdüsen (21', 21") zum Ausbringen der Spritzflüssgkeit (S) auf der landwirtschaftlichen Nutzfläche;
- einen ersten Tank (3) für eine Trägerflüssigkeit (T);
- eine die Trägerflüssigkeit (T) aus dem ersten Tank (3) zur Spritzbalkenanordnung (2) fördernde erste Pumpe (4);
- einen zweiten Tank (5_{A}) für ein Wirkstoffmittel (A);
- wenigstens eine das Wirkstoffmittel (A) vom zweiten Tank (5_{A}) zur Spritzbalkenanordnung (2) fördernde zweite Pumpe (6_{A}); und
- wenigstens eine Direkteinspeisungseinheit (22', 22"), um während des Ausbringens das Wirkstoffmittel (A) in die Trägerflüssigkeit (T) einzuspeisen und daraus das Spritzmittel (S) zu bilden,
**dadurch gekennzeichnet, dass**
die wenigstens eine zweite Pumpe (6_{A}) als Stoßwelleninjektor mit einer aktiven Membran (63) zur Förderung des Wirkstoffmittels (A) und mit einem Stator (62) zur Erzeugung eines auf die aktive Membran (63) direkt einwirkenden elektromagnetischen Anregungsfelds ausgebildet ist.

2. Spritzeinrichtung (1) nach Anspruch 1, wobei die wenigstens eine zweite Pumpe (6_{A}) stromaufwärts der aktiven Membran (63) ein Einlassventil (65) und stromabwärts der aktiven Membran (63) ein Auslassventil (66) umfasst, um die Fließrichtung (F₁, F₂) des Wirkstoffmittels (A) durch die zweite Pumpe (6_{A}) hindurch vorzugeben.

3. Spritzeinrichtung (1) nach Anspruch 1 oder 2, wobei eine Verdünnungseinheit (7_{A}) stromaufwärts der wenigstens einen zweiten Pumpe (6_{A}) angeordnet ist, um das Wirkstoffmittel (A) vor dem Fördern mit der zweiten Pumpe (6_{A}) mit der Trägerflüssigkeit (T) aus dem ersten Tank (3) oder mit einer Verdünnungsflüssigkeit aus einem Zusatztank zu verdünnen.

4. Spritzeinrichtung (1) nach einem der Ansprüche 1 - 3, wobei eine erste Druckregulierungseinheit (8) stromabwärts der ersten Pumpe (4) angeordnet ist, um den Druck der Trägerflüssigkeit (T) stromaufwärts der Direkteinspeisungseinheit (22', 22") zu regulieren.

5. Spritzeinrichtung (1) nach Anspruch 4, wobei die erste Druckregulierungseinheit (8) als Dreiwegeventil ausgebildet ist, um einen Teil der von der ersten Pumpe (4) geförderten Trägerflüssigkeit (T) zurück in den ersten Tank (3) zu führen und einen anderen Teil der Trägerflüssigkeit (T) zur Direkteinspeisungseinheit (22', 22").

6. Spritzeinrichtung (1) nach einem der Ansprüche 1 - 5, wobei wenigstens eine zweite Druckregulierungseinheit (9) stromabwärts der wenigstens einen zweiten Pumpe (6_{A}) angeordnet ist, um den Druck des Wirkstoffmittels (A) vor der Direkteinspeisungseinheit (22', 22") zu regulieren.

7. Spritzeinrichtung (1) nach Anspruch 6, wobei die zweite Druckregulierungseinheit (9) als Ventilblende ausgebildet ist.

8. Spritzeinrichtung (1) nach einem der Ansprüche 1 - 7, wobei genau eine zweite Pumpe (5_{A}) vorhanden ist, die dem zweiten Tank zugeordnet (5_{A}) ist, wobei insbesondere die Spritzbalkenanordnung (2) mehrere Teilbreiten (20', 20") jeweils mit einer Gruppe von Spritzdüsen (21', 21") umfasst, und wobei insbesondere jeder Teilbreite (20', 20") ein Steuerventil (23_{A}', 23_{A}") zugeordnet ist, um in die Teilbreiten (20', 20") verschiedene Wirkstoffmittelmengen einzuspeisen.

9. Spritzeinrichtung (1) nach einem der Ansprüche 1 - 7, wobei die Spritzbalkenanordnung (2) mehrere Teilbreiten (20', 20") jeweils mit einer Gruppe von Spritzdüsen (21', 21") umfasst, wobei mehrere zweite Pumpen und mehrere Direkteinspeisungseinheiten vorhanden sind, und wobei jeder Teilbreite eine der zweiten Pumpen und eine der Direkteinspeisungseinheiten zugeordnet sind, um in die Teilbreiten verschiedene Wirkstoffmittelmengen einzuspeisen.

10. Spritzeinrichtung (1) nach einem der Ansprüche 1 - 7, wobei mehrere zweite Pumpen und mehrere Direkteinspeisungseinheiten vorhanden sind, und wobei jeweils einer Spritzdüse (21', 21") eine zweite Pumpe und eine Direkteinspeisungseinheit zugeordnet sind.

11. Spritzeinrichtung (1) nach einem der Ansprüche 1 -10, weiter umfassend einen dritten Tank (5_{B}) für ein weiteres Wirkstoffmittel (B) und wenigstens eine das weitere Wirkstoffmittel (B) vom dritten Tank (5_{B}) zur Spritzbalkenanordnung (2) fördernde dritte Pumpe (6_{B}), die ebenfalls als Stoßwelleninjektor ausgebildet ist, und wobei die wenigstens eine Direkteinspeisungseinheit (22', 22") dazu ausgebildet ist, während des Ausbringens beide Wirkstoffmittel (A,B) in die Trägerflüssigkeit (T) einzuspeisen und daraus das Spritzmittel (S) zu bilden.

12. Spritzeinrichtung nach einem der Ansprüche 1 - 11, wobei die wenigstens eine zweite Pumpe (6_{A}) als Dosierpumpe ausgebildet ist.

13. Feldspritze mit einem Fahrwerk und einer Spritzeinrichtung (1) nach einem der Ansprüche 1 - 12, wobei die Spritzeinrichtung (1) auf dem Fahrwerk angeordnet ist und darüber auf einer landwirtschaftlichen Nutzfläche abstützbar ist.

14. System aus einem Ackerschlepper und einer daran angeordneten Spritzeinrichtung (2) nach einem der Ansprüche 1-12 oder einer an den Ackerschlepper angekoppelten Feldspritze nach Anspruch 13.
